# FASCICULE DE BREVET EUROPEEN

(11) **EP 0 522 960 B1**
(45) Date de publication et mention de la délivrance du brevet: **27.09.1995**
(21) Numéro de dépôt: 92401965.6
(22) Date de dépôt: 08.07.1992
(51) Int. Cl.: A47J 37/06

(54) **Appareil de cuisson à résistance électrique de chauffage**
Kochgerät mit elektrischer Widerstandsheizung
Cooking apparatus with electric resistance heating

(30) Priorité: 10.07.1991 FR 9108681
(43) Date de publication de la demande: 13.01.1993
(73) Titulaire: SEB S.A., F-21260 Selongey (FR)
(72) Inventeur: Guerrier, Didier, F-74150 Rumilly (FR)
(74) Mandataire: Keib, Gérard

(56) Documents cités:
- EP-A- 0 054 160
- EP-A- 0 139 885
- DE-A- 2 701 502

## Description

La présente invention concerne un appareil de cuisson à chauffage électrique, notamment conçu pour pouvoir être posé sur une table au milieu des convives.

Cet appareil est destiné notamment à chauffer le fromage à raclette contenu dans des coupelles.

Les appareils connus de ce type comprennent un socle au-dessus duquel est fixée une plaque métallique servant de support pour les coupelles à raclette, un couvercle s'étendant à une certaine distance au-dessus de ladite plaque et une résistance électrique de chauffage s'étendant sous le couvercle. Par ailleurs, des organes sont prévus pour supporter le couvercle et la périphérie de la résistance électrique de chauffage et pour fixer la plaque métallique au socle.

Ces organes de fixation comprennent un grand nombre de pièces différentes qui compliquent le montage des différentes parties de l'appareil et augmentent le coût de celui-ci. Voir par exemple EP-A-54 160.

Le but de la présente invention est de remédier aux inconvénients des réalisations connues en proposant un appareil de cuisson du type visé ci-dessus qui soit particulièrement facile à monter et comportant à cet effet un nombre de pièces mécaniques très réduit et de faible coût.

L'appareil de cuisson visé par l'invention est décrit dans la revendication 1 et il comprend ainsi un socle au-dessus duquel est fixée une plaque métallique servant de support pour les aliments ou pour des récipients renfermant un aliment, un couvercle s'étendant à une certaine distance au-dessus de ladite plaque et une résistance électrique de chauffage s'étendant sous le couvercle, des organes étant prévus pour supporter le couvercle et la périphérie de la résistance électrique de chauffage et pour fixer la plaque métallique au socle.

Lesdits organes comprennent une série d'entretoises métalliques s'étendant entre le socle et le couvercle, le bord supérieur de ces entretoises supportant la périphérie du couvercle, le bord inférieur de ces entretoises étant fixé au socle, ces entretoises étant engagées dans des ouvertures pratiquées dans la plaque et étant pourvues d'encoches et/ou d'épaulements venant en prise avec les bords desdites ouvertures pour maintenir la plaque en position et rendre celle-ci solidaire du socle et la partie desdites entretoises située entre la plaque et le couvercle étant conformée pour supporter le bord de la résistance de chauffage au moins lorsque celle-ci est chaude.

Les entretoises de l'appareil de cuisson conforme à l'invention présentent ainsi plusieurs fonctions :
elles servent à supporter le couvercle, à fixer la plaque au socle, à soutenir la périphérie de la résistance de chauffage notamment lorsque celle-ci est chaude et à définir entre elles plusieurs compartiments destinés à recevoir chacun par exemple une coupelle à raclette.

Chaque entretoise remplace ainsi plusieurs pièces mécaniques de fixation.

Ces entretoises facilitent par conséquent le montage de l'appareil et de ce fait en diminuent le coût.

Lesdites entretoises sont constituées par des lames découpées dans une tôle, ces lames étant engagées chacune dans une fente pratiquée dans la plaque.

Ces entretoises en forme de lames découpées sont faciles à fabriquer et à manipuler. De plus, du fait de leur faible épaisseur, elles n'encombrent pas l'espace compris entre le couvercle et la plaque de sorte que la majeure partie de la surface de celle-ci est disponible pour y disposer les aliments ou les coupelles à raclette.

Chaque lame comporte dans la zone adjacente à la plaque d'un côté un épaulement s'étendant sous l'extrémité d'une fente de la plaque et de l'autre côté une encoche engagée sur l'autre extrémité de ladite fente.

Ces épaulement et encoche pratiquées sur chaque lame formant entretoise permettent ainsi de lier la plaque à chaque lame, sans recourir à des moyens de fixation complémentaires difficiles à mettre en oeuvre.

De préférence, chaque lame comporte dans une zone située légèrement au-dessus de l'épaulement une partie rétrécie dont la largeur est inférieure à la longueur de la fente.

Cette partie rétrécie permet d'engager la lame dans la fente de la plaque puis de basculer cette lame pour engager l'encoche de celle-ci dans une extrémité de la fente de la plaque puis d'engager l'épaulement de la lame sous l'autre extrémité de la fente.

D'autres particularités et avantages de l'invention apparaîtront encore dans la description ci-après.

Aux dessins annexés, donnés à titre d'exemples non limitatifs :
- la figure 1 est une vue en coupe longitudinale d'un appareil de cuisson conforme à l'invention,
- la figure 2 est une vue de dessus partielle de la plaque de l'appareil montrant une fente destinée à recevoir une lame formant entretoise,
- la figure 3 est une vue en coupe longitudinale partielle de la plaque montrant les diverses positions occupées par une lame-entretoise, lors du montage de celle-ci dans la plaque,
- la figure 4 est une vue d'une lame-entretoise suivant la flèche F de la figure 1,
- la figure 5 est une vue d'une lame-entretoise suivant la flèche G de la figure 1.

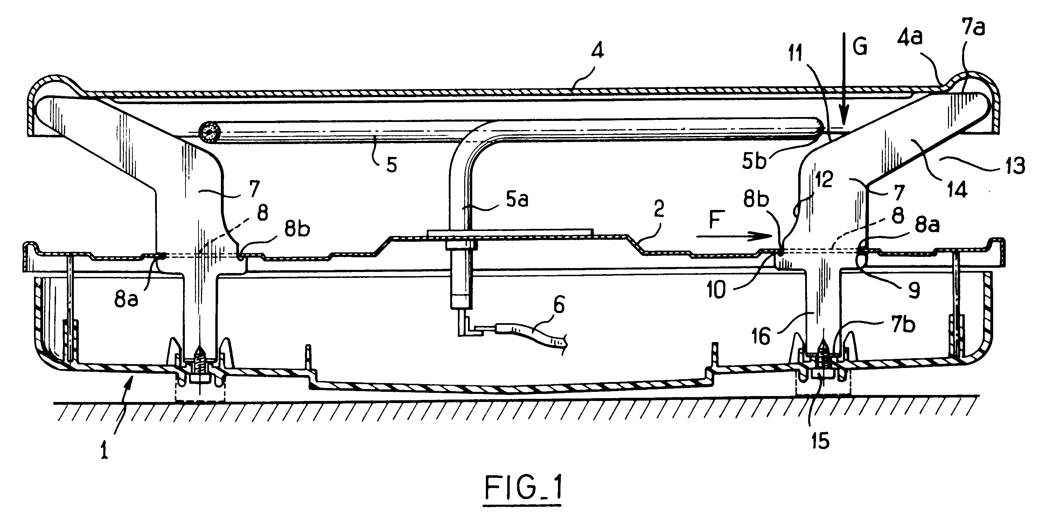

Dans la réalisation de la figure 1, l'appareil de cuisson du genre appareil à raclette comporte un socle 1, par exemple en matière plastique, au-dessus duquel est fixée une plaque métallique 2 servant de support pour les aliments ou pour des récipients tels que des coupelles à raclette. Un couvercle métallique 3 s'étend à une certaine distance au-dessus de la plaque 2 et une résistance électrique de chauffage 5, par exemple du type blindée, s'étend sous le couvercle 4, mais au-dessus de la plaque 2.

La résistance électrique 5 comporte une partie 5a qui est fixée au centre de la plaque 2 et traverse celle-ci. Cette résistance 5 est reliée au secteur par des conducteurs tels que 6 s'étendant à l'intérieur du socle 1.

Des organes sont prévus pour supporter le couvercle 4 et la périphérie de la résistance électrique de chauffage 5 et pour fixer la plaque métallique 2 au socle 1.

Conformément à l'invention, ces organes comprennent une série d'entretoises métalliques 7, par exemple au nombre de quatre, s'étendant entre le socle 1 et le couvercle 4.

Le bord supérieur 7a de ces entretoises 7 supporte la périphérie 4a du couvercle 4. Le bord inférieur 7b de ces entretoises 7 est fixé au socle 1. Par ailleurs, ces entretoises 7 sont engagées dans des ouvertures 8 pratiquées dans la plaque 2. Ces entretoises 7 sont pourvues chacune sur leurs bords opposés d'une encoche 9 et d'un épaulement 10 venant en prise avec les bords 8a, 8b des ouvertures 8 pour retenir la plaque 2.

La partie 11 des entretoises 7 située entre la plaque 2 et le couvercle 4 est conformée pour supporter le bord 5b de la résistance de chauffage 5 au moins lorsque celle-ci est chaude.

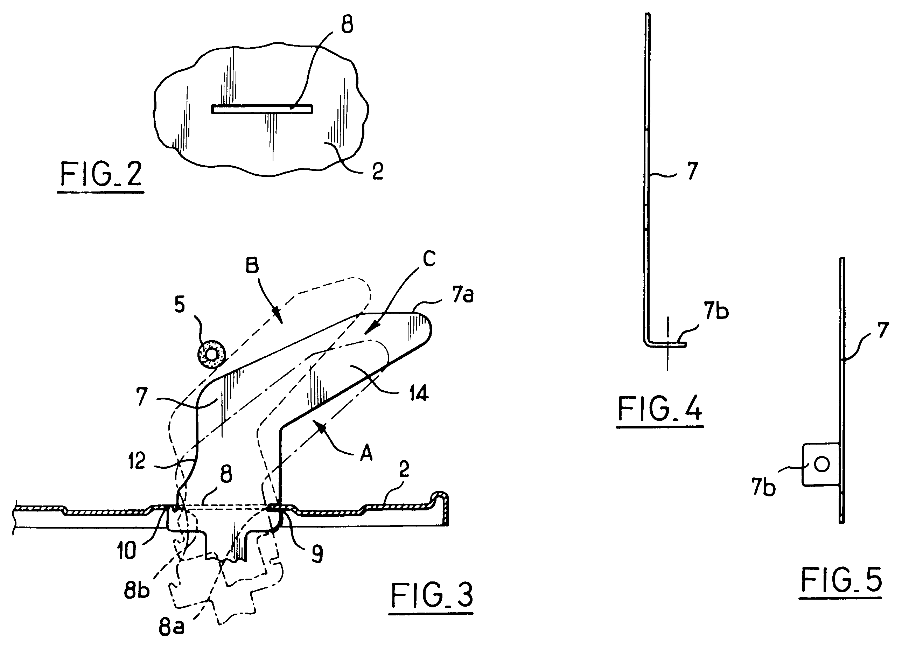

Les entretoises 7 sont constituées par des lames découpées dans une tôle par exemple en acier inoxydable. Ces lames sont engagées chacune dans une fente 8 pratiquée dans la plaque 2 (voir également figure 2).

Chaque lame 7 comporte dans la zone adjacente à la plaque 2 d'un côté un épaulement 10 s'étendant sous l'extrémité 8b d'une fente 8 de la plaque 2 et de l'autre côté une encoche 9 engagée sur l'autre extrémité de la fente 8.

Chaque lame 7 comporte (voir figures 1 et 3) dans une zone située légèrement au-dessus de l'épaulement 10 une partie rétrécie ou échancrée 12 dont la largeur est inférieure à la longueur de la fente 8.

La fonction de cette partie échancrée 12 sera décrite plus loin.

On voit également sur les figures 1 et 3 que les lames-entretoises 7 présentent une partie sensiblement verticale 16 s'étendant entre le socle 1 et sensiblement la mi-hauteur de l'espace 13 compris entre la plaque 2 et le couvercle 4 et une partie oblique 14 s'étendant vers l'extérieur. L'extrémité 7a de cette partie oblique 14 sert de support au couvercle 4.

Le bord 11 adjacent à l'intérieur de l'appareil de cette partie oblique 14 sert de butée pour le bord 5b de la résistance de chauffage lorsque celle-ci est chaude.

Par ailleurs, comme indiqué sur les figures 4 et 5, l'extrémité 7b des lames 7 adjacente au socle 1 est pliée à angle droit et est fixée au socle 1 au moyen d'une vis 15 (voir figure 1).

Pour monter l'appareil de cuisson que l'on vient de décrire, on procède comme suit (voir figure 3) :
On engage la partie oblique 14 de chaque lame formant entretoise 7 dans une fente 8 de la plaque 2, par le dessous de celle-ci, comme indiqué en A sur la figure 3.

On pousse ensuite la lame 7 dans la fente 8 jusqu'à ce que l'encoche 9 vienne en prise avec le bord 8a de la fente 8 (voir position B sur la figure 3).

On fait alors basculer la lame 7 pour amener l'épaulement 8 en contact avec le bord 8b de la fente 8 (voir position C).

On voit sur la figure 3 que l'échancrure 12 réduit la largeur de la lame 7 et permet l'engagement de celle-ci dans la fente 8.

Une fois la lame 7 en place dans la fente 8, il suffit de fixer son extrémité pliée 7b au socle 1 au moyen de la vis 15.

Les lames formant entretoises 7 assurent ainsi une liaison rigide entre la plaque 2 et le socle 1.

Le couvercle 4 est ensuite simplement posé sur les extrémités 7a des entretoises 7.

Lors du chauffage, la résistance 5 qui est simplement fixée au centre de la plaque 2, tend à descendre légèrement vers le bas. Cependant, les bords 11 des entretoises 7 constituent une butée qui limite le déplacement de la résistance 5 vers le bas.

Du fait de la faible surface de contact entre les lames 7 et la périphérie 5a de la résistance 5 et de la minceur des lames 7 (moins d'un millimètre), ces dernières transmettent peu de chaleur vers le socle et vers l'extérieur.

Bien entendu, l'invention n'est pas limitée à l'exemple de réalisation que l'on vient de décrire et on peut apporter à celui-ci de nombreuses modifications sans sortir du cadre de l'invention.

## Revendications

1. Appareil de cuisson comportant un socle (1) au-dessus duquel est fixée une plaque métallique (2) servant de support pour les aliments ou pour des récipients renfermant un aliment, un couvercle (4) s'étendant à une certaine distance au-dessus de ladite plaque (2) et une résistance électrique de chauffage s'étendant sous le couvercle (4), des organes étant prévus pour supporter le couvercle (4) et la périphérie de la résistance électrique de chauffage (5) et pour fixer la plaque métallique (2) au socle (1), lesdits organes comprennent une série d'entretoises métalliques (7) s'étendant entre le socle (1) et le couvercle (4), le bord supérieur (7a) de ces entretoises (7) supportant la périphérie (4a) du couvercle (4), le bord inférieur (7b) de ces entretoises (7) étant fixé au socle (1), ces entretoises (7) étant engagées dans des ouvertures (8) pratiquées dans la plaque (2) et étant pourvues d'encoches (9) et/ou d'épaulements (10) venant en prise avec les bords (8a, 8b) desdites ouvertures (8) et la partie (11) desdites entretoises (7) située entre la plaque (2) et le couvercle (4) étant conformée pour supporter le bord (5b) de la résistance de chauffage (5) au moins lorsque celle-ci est chaude, ces entretoises étant engagées chacune dans une fente (8) pratiquée dans la plaque (2), caractérisé en ce que lesdites entretoises (7) sont constituées par des lames découpées dans une tôle, chaque lame (7) comportant dans la zone adjacente à la plaque (2), d'un côté un épaulement (10) s'étendant sous l'extrémité (8b) d'une fente (8) de la plaque (2) et de l'autre côté, une encoche (9) engagée sur l'autre extrémité (8a) de ladite fente (8), rendant ainsi la plaque (2) solidaire du socle (1).

2. Appareil conforme à la revendication 1, caractérisé en ce que chaque lame (7) comporte dans une zone située légèrement au-dessus de l'épaulement (10) une partie rétrécie (12) dont la largeur est inférieure à la longueur de la fente (8).

3. Appareil conforme à la revendication 1 ou 2, caractérisé en ce que les entretoises ou lames (7) présentent une partie (16) s'étendant verticalement entre le socle (1) et sensiblement la mi-hauteur de l'espace (13) compris entre la plaque (2) et le couvercle (4) et une partie oblique (14) s'étendant vers l'extérieur dont l'extrémité (7a) sert de support au couvercle (4) et dont le bord (11) adjacent à l'intérieur de l'appareil sert de butée pour le bord (5b) de la résistance de chauffage (5) lorsque celle-ci est chaude.

4. Appareil conforme à l'une des revendications 1 à 3, caractérisé en ce que l'extrémité (7b) des lames (7) adjacente au socle (1) est pliée à angle droit et est fixée au socle (1) au moyen d'une vis (15).

## Claims

1. A cooking appliance comprising a base (1) above which is fixed a metal plate (2) acting as a support for the food or for containers containing a food, a lid (4) extending some distance above the plate (2) and an electrical heating resistance extending beneath the lid (4), means being provided to support the lid (4) and the periphery of the electric heating resistance (5) and to fix the metal plate (2) to the base (1), said means comprising a series of metal struts (7) extending between the base (1) and the lid (4), the top edge (7a) of said struts (7) supporting the periphery (4a) of the lid (4), the bottom edge (7b) of said struts (7) being fixed to the base (1), said struts (7) being engaged in apertures (8) formed in the plate (2) and being provided with notches (9) and/or shoulders (10) engaging the edges (8a, 8b) of said apertures (8) and that part (11) of said struts (7) which is situated between the plate (2) and the lid (4) being shaped to support the edge (5b) of the heating resistance (5) at least when the latter is hot, said struts each being engaged in a slot (8) formed in the plate (2), characterised in that the said struts (7) are formed by strips cut out from a metal sheet, each strip (7) comprising, in the zone adjacent the plate (2), on one side: a shoulder (10) extending beneath the end (8b) of a slot (8) in the plate (2) and, on the other side: a notch (9) engaging the other end (8a) of said slot (8), thus connecting the plate (2) rigidly to the base (1).

2. An appliance according to claim 1, characterised in that each strip (7) comprises, in a zone situated slightly above the shoulder (10), a narrowed part (12), the width of which is less than the length of the slot.

3. An appliance according to claim 1 or 2, characterized in that the struts or strips (7) have a part (16) which extends vertically between the base (1) and substantially midway along the height of the space (13) between the plate (2) and the lid (4) and an oblique part (14) extending outwardly, the end (7a) thereof serving as a support for the lid (4) and the edge (11) adjacent the interior of the appliance serving as an abutment for the edge (5b) of the heating resistance (5) when the latter is hot.

4. An appliance according to any one of claims 1 to 3, characterised in that the end (7b) of the strips (7) adjacent the base (1) is bent at a right angle and fixed to the base (1) by means of a screw (15).

## Patentansprüche

1. Kochgerät, mit einem Sockel (1), über dem eine metallische Platte (2) befestigt ist, die als Träger für Lebensmittel oder für ein Lebensmittel enthaltende Behälter dient, einem Deckel (4), der sich in einem gewissen Abstand über der Platte (2) erstreckt, und einem elektrischen Heizwiderstand, der sich unter dem Deckel (4) erstreckt, wobei Teile vorgesehen sind, um den Deckel (4) und den Umfang des elektrischen Heizwiderstandes (5) zu tragen und die metallische Platte (2) am Sockel (1) zu befestigen, wobei die Teile einen Satz metallischer Stege (7) enthalten, die sich zwischen dem Sockel (1) und dem Deckel (4) erstrecken, wobei der obere Rand (7a) dieser Stege (7) den Umfang (4a) des Deckels (4) trägt und der untere Rand (7b) dieser Stege (7) am Sockel (1) befestigt ist, wobei diese Stege (7) in Öffnungen (8), die in der Platte (2) ausgebildet sind, eingesetzt und mit Kerben (9) und/oder mit Absätzen (10) versehen sind, die mit den Rändern (8a, 8b) der Öffnungen (8) in Eingriff kommen und wobei der zwischen der Platte (2) und dem Deckel (4) liegende Abschnitt (11) der Stege (7) so ausgebildet ist, daß er den Rand (5b) des Heizwiderstandes (5) wenigstens dann unterstützt, wenn dieser heiß ist, wobei jeder dieser Stege in einen Schlitz (8) eingesetzt ist, der in der Platte (2) ausgebildet ist, dadurch gekennzeichnet, daß die Stege (7) durch aus einem Blech ausgeschnittene Plättchen gebildet sind, wobei jedes Plättchen (7) in einem der Platte (2) benachbarten Bereich auf der einen Seite einen Absatz (10), der sich unter dem Ende (8b) eines Schlitzes (8) der Platte (2) erstreckt, und auf der anderen Seite eine Kerbe (9) enthält, die am anderen Ende (8a) des Schlitzes (8) angreift, wodurch die Platte (2) fest mit dem Sockel (1) verbunden ist.

2. Gerät nach Anspruch 1, dadurch gekennzeichnet, daß jedes Plättchen (7) in einem Bereich, der geringfügig oberhalb des Absatzes (10) liegt, einen eingeschnürten Abschnitt (12) enthält, dessen Breite kleiner ist als die Länge des Schlitzes (8).

3. Gerät nach einem der Ansprüche 1 und 2, dadurch gekennzeichnet, daß die Stege oder Plättchen (7) einen Abschnitt (16), der sich vertikal zwischen dem Sockel (1) und der halben Höhe des zwischen der Platte (2) und dem Deckel (4) enthaltenen Raumes (13) erstreckt, und einen sich nach außen erstreckenden, schrägen Abschnitt (14) aufweisen, dessen Ende (7a) als Stütze für den Deckel (4) dient und dessen zum Inneren des Gerätes hin liegender Rand (11) als Auflage für den Rand (5b) des Heizwiderstandes (5) dient, wenn dieser heiß ist.

4. Gerät nach einem der Ansprüche 1 bis 3, dadurch gekennzeichnet, daß das am Sockel (1) anliegende Ende (7b) der Plättchen (7) im rechten Winkel umgebogen und am Sockel (1) mittels einer Schraube (15) befestigt ist.
